Europäisches Patentamt

European Patent Office

Office européen des brevets

(19)

(11) Numéro de publication : **0 220 116**
**B1**

(12) **FASCICULE DE BREVET EUROPÉEN**

(45) Date de publication du fascicule du brevet :
28.03.90

(51) Int. Cl.⁵ : **G 01 M 17/04, F 16 F   9/46**

(21) Numéro de dépôt : 86402255.3

(22) Date de dépôt : 10.10.86

(54) **Procédé et dispositif de contrôle d'une suspension de véhicule par mesure du coefficient de frottement de l'amortisseur.**

(30) Priorité : 11.10.85 FR 8515082

(43) Date de publication de la demande :
29.04.87 Bulletin 87/18

(45) Mention de la délivrance du brevet :
28.03.90 Bulletin 90/13

(84) Etats contractants désignés :
DE GB IT

(56) Documents cités :
DE–A– 2 043 526
DE–A– 3 316 011
GB–A– 2 093 946
US–A– 4 458 234

(73) Titulaire : **JAEGER**
**2, rue Baudin**
**F-92303 Levallois-Perret (FR)**

(72) Inventeur : **Delevallée, Jean-Louis**
**14 Allée des Courlis**
**F-95600 Cergy Saint Christophe (FR)**
Inventeur : **Reymond, Philippe**
**26, rue Georges Boulet**
**F-91330 Yerres (FR)**

(74) Mandataire : **Martin, Jean-Jacques et al**
**Cabinet REGIMBEAU 26, Avenue Kléber**
**F-75116 Paris (FR)**

## Description

La présente invention concerne le contrôle de la suspension des véhicules automobiles.

On sait que les suspensions de véhicules automobiles sont généralement composées, pour chacune des roues, d'un ensemble, formé d'un amortisseur relié en parallèle à un ressort, disposé entre les masses suspendues et les masses non suspendues du véhicule.

On entend par masses suspendues l'ensemble des parties de la caisse du véhicule qui reposent sur la suspension ; tandis que l'on entend par masses non suspendues l'ensemble des masses mobiles par rapport à la caisse, et en particulier les roues et triangles de suspension. Le cas échéant, les masses non suspendues comprennent également les freins et une partie des amortisseurs.

Le ressort de la suspension a pour fonction première de limiter la propagation, vers la caisse du véhicule, des mouvements verticaux des roues, afin d'accroître le confort routier.

Néanmoins, après avoir encaissé une irrégularité de la route le ressort ne retrouve pas rapidement sa position d'équilibre stable. L'énergie qu'il a emmagasinée tend à induire des oscillations de la caisse ainsi que des chocs et rebonds de la roue sur le sol pendant lesquels cette énergie se dissipe en chaleur.

Pour éviter cet inconvénient, on a proposé depuis longtemps de placer en parallèle du ressort un amortisseur dont le rôle est précisément de dissiper l'énergie emmagasinée dans le ressort, donc d'empêcher la création de mouvements parasites nocifs pour la qualité du confort et de la tenue de route.

L'amortisseur le plus couramment usité se compose d'un corps lié rigidement aux masses non suspendues, qui définit une chambre principale remplie d'un fluide hydraulique, d'une tige coulissante, liée rigidement à la caisse du véhicule et à un piston percé de trous calibrés et équipés de clapets, qui se déplace dans la chambre principale, et d'une chambre secondaire, dite de compensation, remplie partiellement de gaz et de fluide hydraulique, qui communique avec la chambre principale par l'intermédiaire de clapets.

Néanmoins, d'autres types d'amortisseurs pour suspension de véhicules ont été proposés.

La présente invention n'est pas limitée à un type d'amortisseur particulier.

La fonction de l'amortisseur est donc de transformer en chaleur l'énergie mécanique de mouvement de sa tige. Pour cela, l'amortisseur oppose au mouvement de sa tige une force sensiblement proportionnelle à la vitesse de cette dernière.

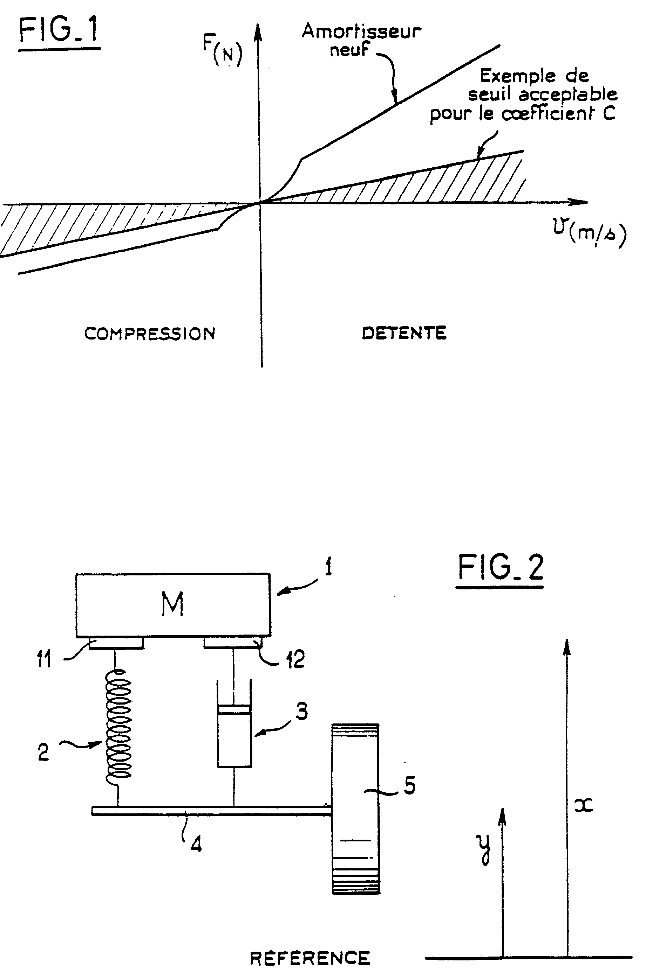

On a représenté schématiquement, sur la figure 1 annexée, la courbe : force appliquée sur la tige/vitesse de la tige, d'un amortisseur.

Chaque partie de cette courbe, force appliquée sur la tige/vitesse de la tige, correspondant respectivement à la détente et à la compression de l'amortisseur, comporte deux zones.

La zone de courbe linéaire correspond aux conditions de fonctionnement où le fluide hydraulique circule par les clapets.

Quand la vitesse de la tige diminue la pression du fluide atteint une valeur seuil au-dessous de laquelle les clapets ne peuvent plus fonctionner. Le fluide hydraulique circule alors par les orifices calibrés. Cela correspond à la seconde zone de la courbe, de type parabolique.

On sait néanmoins que le vieillissement a pour effet de diminuer la viscosité du fluide hydraulique et d'abaisser progressivement l'efficacité des multiples étanchéités de l'amortisseur, notamment au niveau des joints et clapets.

Cela provoque bien sûr un affaissement de la caractéristique force/vitesse. Cet affaissement peut d'ailleurs apparaître uniquement sur une des zones de la courbe (zone linéaire ou parabolique) avant de s'étendre aux suivantes.

On sait par ailleurs que l'état de la suspension influence dans une large mesure la tenue de route du véhicule.

Il est donc souhaitable de disposer de moyens permettant de contrôler la suspension des véhicules.

De nombreux moyens de contrôle à cet effet ont déjà été proposés. Toutefois, ces moyens ne donnent pas pleinement satisfaction.

On a ainsi proposé, comme décrit dans le brevet US-A-2 923 147 et dans le brevet Italien 431 283, des moyens de contrôle mécaniques. L'utilisation de ces moyens est cependant limitée aux garages d'entretien. De plus, ces moyens ne permettent qu'un contrôle statique. Enfin, ces moyens ne permettent pas un contrôle fréquent voire continu de la suspension. Au mieux, ces moyens mécaniques sont utilisés généralement à une fréquence de l'ordre de une fois par an.

On a également proposé, comme décrit dans les brevets US-A-3 921 945 et US-A-3 937 152, des moyens de détection des vibrations d'un véhicule. Cette disposition ne permet pas cependant de réaliser un contrôle précis et fiable.

On a également proposé, comme décrit dans les brevets GB-A-1 483 231 et US-A-4 317 105, des moyens sensibles à l'accélération du véhicule dans la direction verticale. Là encore, cependant, les dispositions de ce type jusqu'ici proposées ne permettent pas de réaliser un contrôle précis et fiable.

On a également proposé, comme décrit dans le brevet GB-A-1 508 527, de comparer les caractéristiques force et vitesse d'un amortisseur en utilisant deux capteurs sensibles respectivement à ces données. Les moyens de test décrits dans ce document ne permettent pas cependant de contrôler de façon précise et fiable l'ensemble de la courbe force/vitesse.

2

On a également proposé, comme décrit dans les brevets US-A-3 833 094 et US-A-3 646 512 d'utiliser des détecteurs de surcharge. Ces dispositifs ne permettent qu'une détection du type tout ou rien et ne permettent pas de renseigner sur l'état de la suspension.

On a proposé d'utiliser des jauges de contrainte pour mesurer les forces exercées en divers points de la suspension. De tels dispositifs sont par exemple décrits dans les brevets US-A-4 458 234, DE-A-2 351 862 et DE-A-2 341 423. Ces documents cependant se contentent d'évoquer, pour l'exploitation des signaux électriques délivrés par les jauges, l'agencement de ces jauges en pont ou encore la mesure des variations d'amplitude, positives ou négatives, des forces exercées sur l'amortisseur et/ou le ressort. Ces dispositions ne délivrent qu'une information globale sur le fonctionnement de la suspension et ne permettent pas de délivrer une information précise et fiable sur l'état de la suspension, utile au conducteur.

On a également proposé dans le document DE-A-2 043 526, un dispositif de test d'amortisseur hydropneumatique comprenant quatre capteurs : un capteur d'accélération des masses suspendues, un capteur de déplacement de l'axe et deux capteurs de pression reliés à des étages différents de l'amortisseur, ainsi que des moyens de traitement qui exploitent les signaux issus des capteurs.

Le problème posé est donc de concevoir une technique de mesure permettant de détecter de façon fiable, économique et continue, à l'aide de moyens embarcables, l'état de la suspension.

La Demanderesse propose de résoudre le problème ainsi posé grâce à un procédé comprenant les étapes consistant à :

i) générer à l'aide d'un premier capteur un signal dépendant de l'élongation du ressort de la suspension,

ii) générer à l'aide d'un second capteur un signal dépendant de la force exercée sur l'amortisseur, ce procédé étant caractérisé par le fait que :

l'étape i) consiste à mesurer deux valeurs discrètes $\alpha_0$, $\alpha_1$, espacées d'un intervalle de temps T, du signal issu du premier capteur,

l'étape ii) consiste à mesurer au moins une valeur discrète $\beta$ du signal du second capteur simultanément à l'une des mesures obtenues avec le premier capteur, et qu'il comprend en outre

l'étape iii) qui consiste à déterminer la valeur du coefficient c de frottement de l'amortisseur sur la base de la relation :

$$c = \frac{\beta T}{\alpha_1 - \alpha_0} \tag{1}$$

De préférence, le procédé conforme à la présente invention comprend de plus l'étape supplémentaire consistant à comparer la valeur du coefficient de frottement C déterminé à l'étape iii) avec une valeur de seuil et à afficher une alarme lorsque la valeur déterminée du coefficient de frottement tombe en dessous de la valeur de seuil.

Plus précisément encore, selon la présente invention, l'étape de comparaison précitée destinée à définir la nécessité de visualiser une alarme, utilise plusieurs valeurs de seuil correspondant respectivement aux zones caractéristiques de la courbe force/vitesse de l'amortisseur, par exemple 4 valeurs de seuil.

Selon une autre variante, le procédé de contrôle conforme à la présente invention comprend l'étape supplémentaire consistant à exploiter, par exemple par visualisation une information analogique représentative du coefficient de frottement C.

La présente invention concerne de plus un dispositif de contrôle pour la mise en œuvre du procédé précité.

La présente invention concerne également l'application du dispositif précité à la commande de suspensions asservies.

D'autres caractéristiques et avantages de la présente invention apparaîtront à la lecture de la description détaillée qui va suivre et en regard des dessins annexés donnés à titre d'exemples non limitatifs et sur lesquels :

la figure 1 représente la courbe force/vitesse d'un amortisseur,

la figure 2 représente de façon schématique la structure d'une suspension de véhicule,

la figure 3 représente une vue schématique du dispositif de contrôle conforme à la présente invention,

la figure 4 représente schématiquement le procédé de contrôle conforme à la présente invention dans le cas d'un calcul du coefficient de frottement C sur la base de valeurs discrètes des signaux générés par le premier et le second capteurs.

On retrouve sur la figure 2 annexée la masse suspendue 1 correspondant à la caisse du véhicule, la masse non suspendue 4 portant une roue 5, le ressort de suspension 2 et l'amortisseur de suspension 3, ces deux éléments étant montés en parallèle entre la masse suspendue 1 et la masse non suspendue 4.

On aperçoit par ailleurs à l'examen de la figure 2 deux capteurs de force 11, 12 qui génèrent des signaux dépendant des forces exercées respectivement par le ressort de suspension et l'amortisseur.

Selon l'illustration de la figure 2, ces capteurs 11, 12 sont disposés au niveau du point de fixation supérieur du ressort 2 et de l'amortisseur 3 respectivement.

3

Cette disposition ne doit cependant pas être considérée comme limitative.

En effet, en variante, le premier capteur 11 peut être un capteur associé au ressort 2 et sensible au déplacement relatif masses suspendues/masses non suspendues, par exemple une cellule piézoélectrique disposée entre deux spires du ressort de la suspension, dans le cas d'un ressort à boudin, ou encore un capteur de force intercalé entre le ressort de suspension 2 et les masses non suspendues 4.

De même, le second capteur 12 peut être un capteur de force disposé au niveau de la fixation inférieure de l'amortisseur 3.

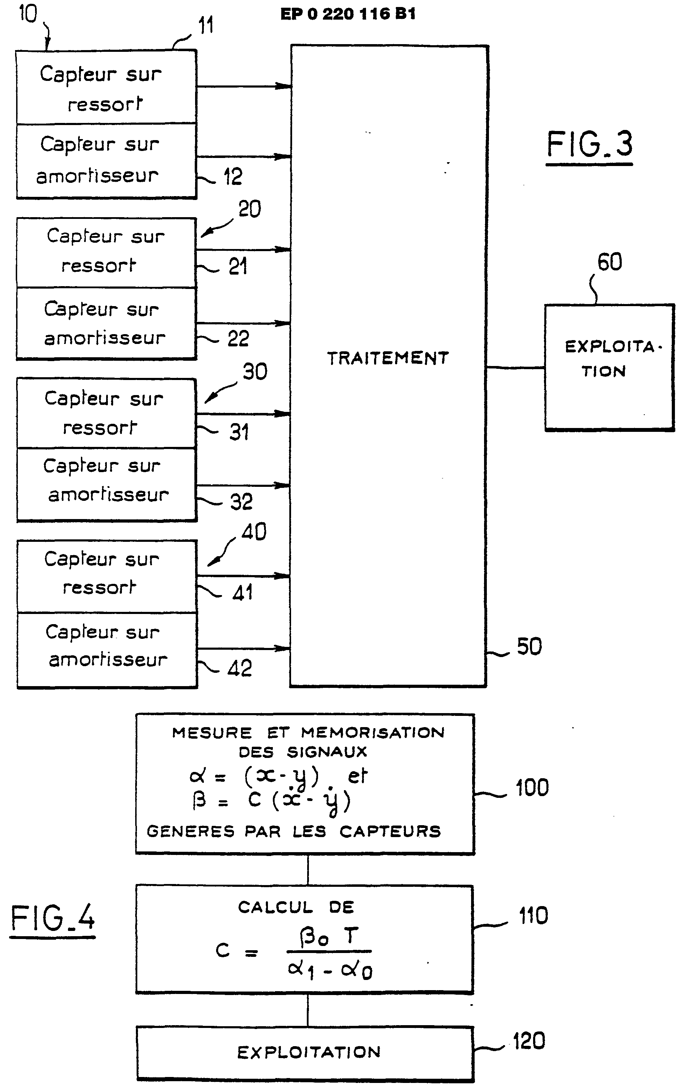

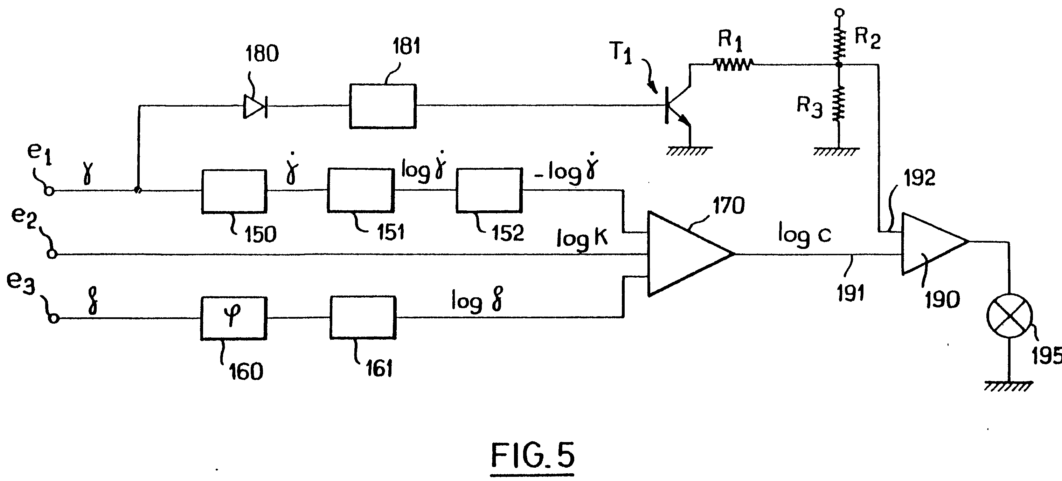

Par ailleurs, de préférence, comme cela est illustré schématiquement sur la figure 3, une paire de capteurs générant respectivement un signal dépendant de la force exercée par le ressort 2 et un signal dépendant de la force exercée sur l'amortisseur 3 sont associés à chaque suspension.

On a ainsi représenté schématiquement sur la figure 3 un dispositif de contrôle conforme à la présente invention pour véhicules automobiles à 4 roues.

On distingue en effet sur cette figure 3 quatre paires 10, 20, 30, 40 de capteurs comprenant chacune un capteur 11, 21, 31, 41, générant un signal dépendant de la force exercée par le ressort et un capteur 12, 22, 32, 42 générant un signal dépendant de la force exercée sur l'amortisseur.

Les signaux générés par les capteurs 11, 12, 21, 22, 31, 32, 41, 42 sont appliqués à des moyens de traitement 50 qui commandent eux-mêmes des moyens d'exploitation, par exemple de visualisation 60.

On va maintenant expliciter le procédé de contrôle conforme à la présente invention dans le cas d'un calcul du coefficient de frottement C sur la base de valeurs discrètes des signaux générés par le premier et le second capteurs.

Le premier capteur 11 est alors choisi pour générer un signal $\alpha$ représentatif de l'élongation du ressort 2, tandis que le second capteur 12 est choisi pour générer un signal $\beta$ représentatif de la vitesse de déplacement de la tige de l'amortisseur 3.

Ces capteurs peuvent être formés par exemple de jauges de contrainte ou de capteurs potentiométriques.

Les moyens de traitement 50 sont alors adaptés pour mémoriser deux valeurs discrètes du signal issu de chaque capteur 11, 21, 31, 41 associé au ressort, et espacées d'un intervalle de temps T.

En d'autres termes, les moyens de traitement 50 sont adaptés pour mémoriser deux valeurs discrètes $\alpha_0$, $\alpha_1$ représentatives de l'élongation du ressort 2, à deux instants espacés de la durée T.

Les moyens de traitement 50 sont par ailleurs adaptés pour mémoriser une valeur discrète $\beta$ du signal issu de chacun des capteurs 12, 22, 32, 42 associés à l'amortisseur, simultanément à la mémorisation de l'une des informations issues des capteurs 11, 21, 31, 41.

Ces valeurs discrètes peuvent aisément être obtenues par échantillonnage de signaux analogiques issus des capteurs 11 et 12.

On sait que la force exercée par le ressort $F_r$ peut s'écrire :

$$F_r = k\alpha \tag{2}$$

dans laquelle

k représente la raideur du ressort, et

$\alpha$ représente l'allongement du ressort.

Par ailleurs, on sait que la force exercée sur l'amortisseur $F_a$ peut s'écrire :

$$F_a = cv = c\dot{\alpha} = \beta \tag{3}$$

dans laquelle :

c représente le coefficient de frottement visqueux, et

v représente la vitesse de la tige de l'amortisseur.

Il résulte de la relation (3) que :

$$c = \beta / \dot{\alpha}_1 \tag{4}$$

relation dans laquelle :

$\beta$ représente la valeur mémorisée du signal issu des capteurs 12, 22, 32, 42 associés à l'amortisseur, tandis que

$\alpha_1$ représente la seconde valeur mémorisée du signal issu des capteurs 11, 21, 31, 41 associés au ressort,

$\dot{\alpha}_1$ représente la dérivée première par rapport au temps de l'élongation du ressort.

Par ailleurs, on peut écrire :

$$\dot{\alpha}_1 = \frac{\alpha_1 - \alpha_0}{T} \tag{5}$$

La combinaison des relations (4) et (5) permet d'obtenir :

$$c = \frac{\beta T}{\alpha_1 - \alpha_0}. \tag{1}$$

4

Le procédé conforme à la présente invention, basé sur l'exploitation de la relation (1) précitée est illustré schématiquement sur la figure 4.

Comme cela est représenté sur cette figure, le procédé de contrôle conforme à la présente invention consiste dans un premier temps (étape référencée 100) à mesurer et mémoriser deux valeurs discrètes $\alpha = (x - y)$ du signal généré par chaque capteur 11, 21, 31, 41 et à mesurer et mémoriser une valeur discrète $\beta = c(\dot{x} - \dot{y})$ du signal généré par les capteurs 12, 22, 32 et 42.

La seconde étape du procédé de contrôle conforme à la présente invention, référencée 110 sur la figure 4 consiste alors à calculer la valeur de c, c'est-à-dire du coefficient de frottement visqueux de l'amortisseur sur la base de la relation (1) précitée.

Une fois ce calcul établi, le procédé de contrôle conforme à la présente invention s'achève par une étape d'exploitation, par exemple de visualisation d'exploitation référencée schématiquement 120 sur la figure 4.

Cette étape de visualisation 120 peut faire l'objet de diverses variantes.

Selon une première de ces variantes, l'étape d'exploitation 120 consiste à comparer la valeur du coefficient de frottement c calculée à l'aide de la formule (1) avec une valeur de seuil et à afficher une alarme lorsque la valeur calculée du coefficient de frottement tombe en dessous de la valeur seuil.

De préférence et plus précisément, on utilise pour cela plusieurs valeurs de seuil correspondant respectivement aux zones caractéristiques de la courbe force/vitesse de l'amortisseur, par exemple 4 valeurs de seuil. On a en effet rappelé dans le préambule de cette demande que comme cela est représenté sur la figure 1 annexée, chaque partie de la courbe : force appliquée sur la tige/vitesse de la tige, correspondant respectivement à la détente et à la compression de l'amortisseur comporte deux zones, l'une linéaire, l'autre de type parabolique.

Néanmoins, on peut aussi utiliser deux valeurs de seuil, l'une pour la phase compression, l'autre pour la phase détente, ou encore un nombre plus important de valeurs seuil pour approximer un seuil de type parabolique aux origines de la courbe force/vitesse.

Selon une seconde de ces variantes, l'étape d'exploitation 120 consiste à exploiter directement, par exemple par visualisation, une information analogique représentative du coefficient de frottement c.

La présente invention peut en particulier être appliquée pour la commande de suspensions asservies, par exemple pour commander la dureté de la suspension, ou encore, pour opérer une correction d'assiette du véhicule.

Le dispositif de contrôle conforme à la présente invention peut également comporter une sortie pour station diagnostic permettant de tracer la courbe caractéristique du coefficient de frottement c.

La présente invention trouve application aussi bien dans le cas des suspensions à roues indépendantes que dans le cas des suspensions à pont rigide.

De préférence les moyens de visualisation 60 sont adaptés pour délivrer une information spécifique pour chacune des suspensions, soit sous forme d'un témoin d'alarme dans le cas d'une comparaison avec une valeur seuil comme précédemment évoqué, soit sous forme d'un affichage analogique de chacun des coefficients c mesurés.

**Revendications**

1. Procédé de contrôle de la suspension de véhicules, comprenant un ressort et un amortisseur comprenant les étapes consistant à :

    i) générer (100) à l'aide d'un premier capteur (11) un signal dépendant de l'élongation du ressort de la suspension, et

    ii) générer (100) à l'aide d'un second capteur (12) un signal dépendant de la force exercée sur l'amortisseur, caractérisé par le fait que :

    — l'étape i) consiste à mesurer deux valeurs discrètes $\alpha_0$, $\alpha_1$ espacées d'un intervalle de temps T du signal du premier capteur (11),

    — l'étape ii) consiste à mesurer au moins une valeur discrète $\beta$ du signal du second capteur (12) simultanément à l'une des mesures obtenues avec le premier capteur, et qu'il comprend en outre

    — l'étape iii) qui consiste à déterminer la valeur du coefficient c de frottement de l'amortisseur sur la base de la relation :

$$c = \frac{\beta T}{\alpha_1 - \alpha_0} \qquad (1)$$

2. Procédé de contrôle selon la revendication 1, caractérisé par le fait qu'il comprend l'étape supplémentaire consistant à comparer la valeur du coefficient de frottement c déterminée à l'étape iii) avec une valeur de seuil et à afficher (120) une alarme lorsque la valeur déterminée du coefficient de frottement tombe en dessous de la valeur seuil.

3. Procédé de contrôle selon la revendication 2, caractérisé par le fait que l'étape de comparaison destinée à définir la nécessité de visualiser une alarme, utilise plusieurs valeurs de seuil correspondant respectivement aux zones caractéristiques de la courbe force/vitesse de l'amortisseur (3).

4. Procédé de contrôle selon l'une des revendications 1 à 3, caractérisé par le fait qu'il comprend l'étape supplémentaire consistant à exploiter, par exemple par visualisation (120), une information analogique représentative du coefficient de frottement c.

5. Dispositif de contrôle pour la mise en œuvre du procédé selon l'une des revendications 1 à 4, comprenant :

— un premier capteur (11, 21, 31, 41) adapté pour générer un signal dépendant de l'élongation du ressort de suspension (2),

— un second capteur (12, 22, 32, 42) adapté pour générer un signal dépendant de la force exercée sur l'amortisseur (3), caractérisé par le fait qu'il comprend :

— des moyens de traitement (50) adaptés pour déterminer la valeur du coefficient de frottement de l'amortisseur à l'aide des signaux générés par le premier et le second capteurs, sur la base de la relation :

$$c = \frac{\beta T}{\alpha_1 - \alpha_0}$$

où $\alpha_0$ et $\alpha_1$ représentent deux valeurs discrètes espacées d'un temps T issues du premier capteur, $\beta$ représente une valeur discrète du signal issu du second capteur simultanément à l'une des valeurs $\alpha_0$ et $\alpha_1$.

6. Dispositif de contrôle selon la revendication 5 caractérisé par le fait que le second capteur (12) est un capteur de force monté sur la fixation supérieure ou inférieure de l'amortisseur (3).

7. Dispositif de contrôle selon l'une des revendications 5 et 6 caractérisé par le fait que le premier capteur (11) est un capteur sensible au déplacement relatif masses suspendues/masses non suspendues.

8. Dispositif de contrôle selon la revendication 7 caractérisé par le fait que le premier capteur (11) est une cellule piézoélectrique disposée entre deux spires du ressort.

9. Dispositif de contrôle selon l'une des revendications 5 et 6 caractérisé par le fait que le second capteur (11) est un capteur de force intercalé entre le ressort de la suspension et les masses non suspendues.

10. Dispositif de contrôle selon l'une des revendications 5 à 9 caractérisé par le fait que le fait qu'il comprend une paire de premier et second capteurs (11, 12 ; 21, 22 ; 31, 32 ; 41, 42) pour chaque suspension.

11. Application du dispositif conforme à l'une des revendications 5 à 10 à la commande de suspension asservies.

## Claims

1. Method for checking the suspension of vehicles, comprising a spring and a shock absorber comprising the stages consisting of :

i) generating (100) by means of a first sensor (11) a signal dependent on the elongation of the spring of the suspension, and

ii) generating (100) by means of a second sensor (12) a signal dependent on the force exerted on the shock absorber, characterised by the fact that :

— the stage i) consists of measuring two discrete values $\alpha_0$, $\alpha_1$ spaced apart by a time interval T of the signal of the first sensor (11),

— the stage ii) consists of measuring at least one discrete value $\beta$ of the signal of the second sensor (12) at the same time as one of the measurements obtained with the first sensor, and that it also comprises

— the stage iii) which consists of determining the value of the coefficient of friction c of the shock absorber on the basis of the relationship :

$$c = \frac{\beta T}{\alpha_1 - \alpha_0} \tag{1}$$

2. Checking method according to Claim 1, characterised by the fact that it comprises the additional stage consisting of comparing the value of the coefficient of friction c determined in stage iii) with a threshold value and of displaying (120) a warning when the ascertained value of the coefficient of friction falls below the threshold value.

3. Checking method according to Claim 2, characterised by the fact that the comparison stage intended to define the necessity of displaying a warning, uses several threshold values corresponding respectively to characteristic areas of the force/speed curve of the shock absorber (3).

4. Checking method according to one of Claims 1 to 3, characterised by the fact that it comprises the additional stage consisting of exploiting, for example by visualisation (120), analog information representative of the coefficient of friction c.

5. Checking apparatus for carrying out the method according to one of Claims 1 to 4, comprising :

— a first sensor (11, 21, 31, 41) adapted to generate a signal dependent on the elongation of the suspension spring (2),

— a second sensor (12, 22, 32, 42) adapted to generate a signal dependent on the force exerted on the shock absorber (3), characterised by the fact that it comprises :

— processing means (50) adapted to determine the value of the coefficient of friction of the shock absorber by means of the signals generated by the first and second sensors, on the basis of the relationship :

$$c = \frac{\beta T}{\alpha_1 - \alpha_0}$$

where $\alpha_0$ and $\alpha_1$ represent two discrete values spaced apart by a time T coming from the first sensor, $\beta$ represents a discrete value of the signal coming from the second sensor at the same time as one of the values $\alpha_0$ and $\alpha_1$.

6. Checking apparatus according to Claim 5, characterised by the fact that the second sensor (12) is a force sensor mounted on the upper or lower anchorage of the shock absorber (3).

7. Checking apparatus according to one of Claims 5 and 6, characterised by the fact that the first sensor (11) is a sensor sensitive to the relative displacement of suspended masses/non-suspended masses.

8. Checking apparatus according to Claim 7, characterised by the fact that the first sensor (11) is a piezoelectric cell located between two turns of the spring.

9. Checking apparatus according to one of Claims 5 and 6, characterised by the fact that the second sensor (11) is a force sensor interposed between the spring of the suspension and the non-suspended masses.

10. Checking apparatus according to one of Claims 5 to 9, characterised by the fact that it comprises a pair of first and second sensors (11, 12 ; 21, 22 ; 31, 32 ; 41, 42) for each suspension.

11. Application of the apparatus according to one of Claims 5 to 10 to controlling servo suspensions.

## Patentansprüche

1. Verfahren zum Überwachen der eine Feder und eine Dämpfungseinrichtung aufweisenden Aufhängung eines Fahrzeugs mit den Schritten :

(i) Erzeugen eines von der Elongation der Feder der Aufhängung abhängigen Signals mit Hilfe eines ersten Aufnehmers (11), und

(ii) Erzeugen eines von der auf die Dämpfungseinrichtung ausgeübten Kraft abhängigen Signals mit Hilfe eines zweiten Aufnehmers (12), dadurch gekennzeichnet, daß

— Schritt (i) darin besteht, im Zeitabstand T zwei diskrete Werte $\alpha_0$, $\alpha_1$ des Signals des ersten Aufnehmers (11) zu messen,

— Schritt (ii) darin besteht, wenigstens einen diskreten Wert $\beta$ des Signals des zweiten Aufnehmers (12) gleichzeitig mit einer der mit dem ersten Aufnehmer erhaltenen Messungen durchzuführen, und daß es weiterhin

— Schritt (iii), der darin besteht, den Wert des Reibungskoeffizienten c der Dämpfungseinrichtung auf der Grundlage der Beziehung

$$c = \frac{\beta T}{\alpha_1 - \alpha_0} \tag{1}$$

zu bestimmen, aufweist.

2. Verfahren zum Überwachen nach Anspruch 1, dadurch gekennzeichnet, daß es einen zusätzlichen Schritt aufweist, bei dem der in Schritt (iii) bestimmte Wert des Reibungskoeffizienten c mit einem Schwellenwert verglichen wird und ein Alarm angezeigt wird (120), wenn der ermittelte Wert des Reibungskoeffizienten unter den Schwellenwert fällt.

3. Verfahren zum Überwachen nach Anspruch 2, dadurch gekennzeichnet, daß der zum Festlegen der Notwendigkeit des Sichtbarmachens eines Alarms bestimmte Vergleichsschritt mehrere Schwellenwerte verwendet, die charakteristischen Bereichen der Kurve Kraft/Geschwindigkeit der Dämpfungseinrichtung (3) entsprechen.

4. Verfahren zum überwachen nach einem der Ansprüche 1 bis 3, dadurch gekennzeichnet, daß es einen zusätzlichen Schritt aufweist, bei dem, beispielsweise durch Sichtbarmachen (120), eine den Reibungskoeffizienten c darstellende Analoginformation ausgewertet wird.

5. Überwachungsvorrichtung zum Durchführen des Verfahrens nach einem der Ansprüche 1 bis 4, mit :

— einem ersten Aufnehmer (11, 21, 31, 41) zum Erzeugen eines von der Elongation der Feder der Aufhängung (2) abhängigen Signals,

— einem zweiten Aufnehmer (12, 22, 32, 42) zum Erzeugen eines von der auf die Dämpfungseinrichtung (3) ausgeübten Kraft abhängigen Signals, dadurch gekennzeichnet, daß sie

— Verarbeitungseinrichtungen (50) zum Bestimmen des Wertes des Reibungskoeffizienten der Dämpfungseinrichtung mittels der vom ersten und zweiten Aufnehmer erzeugten Signale auf der Grundlage der Beziehung

$$c = \frac{\beta T}{\alpha_1 - \alpha_0}$$

aufweist, wobei $\alpha_0$ und $\alpha_1$ zwei im Zeitabstand T vom ersten Aufnehmer gelieferte diskrete Werte darstellen, und $\beta$ einen diskreten Wert des Signals darstellt, das gleichzeitig mit einem der Werte $\alpha_0$ und $\alpha_1$ vom zweiten Aufnehmer geliefert ist.

6. Überwachungsvorrichtung nach Anspruch 5, dadurch gekennzeichnet, daß der zweite Aufnehmer (12) ein an der oberen oder unteren Befestigungsvorrichtung der Dämpfungseinrichtung (3) angebrachter Kraftaufnehmer ist.

7. Überwachungsvorrichtung nach einem der Ansprüche 5 und 6, dadurch gekennzeichnet, daß der erste Aufnehmer (11) ein auf die relative Verschiebung gefederte Massen/nicht-gefederte Massen ansprechender Aufnehmer ist.

8. Überwachungsvorrichtung nach Anspruch 7, dadurch gekennzeichnet, daß der erste Aufnehmer (11) eine zwischen zwei Windungen der Feder angebrachte piezoelektrische Zelle ist.

9. Überwachungsvorrichtung nach einem der Ansprüche 5 und 6, dadurch gekennzeichnet, daß der zweite Aufnehmer (12) ein Kraftaufnehmer zwischen der Feder der Aufhängung und den nicht-gefederten Massen ist.

10. Überwachungsvorrichtung nach einem der Ansprüche 5 bis 9, dadurch gekennzeichnet, daß er für jede Aufhängung ein Paar erster und zweiter Aufnehmer (11, 12 ; 21, 22 ; 31, 32 ; 41, 42) aufweist.

11. Anwendung der Vorrichtung gemäß einem der Ansprüche 5 bis 10 für die Steuerung geregelter Aufhängungen.

FIG.1

$F_{(N)}$

Amortisseur
neuf

Exemple de
seuil acceptable
pour le cœfficient C

$U_{(m/s)}$

COMPRESSION

DETENTE

FIG.2

M

1

11

12

3

2

5

4

$x$

$y$

RÉFÉRENCE

1

## FIG.3

10

11
Capteur sur ressort

Capteur sur amortisseur
12

20
Capteur sur ressort
21

Capteur sur amortisseur
22

30
Capteur sur ressort
31

Capteur sur amortisseur
32

40
Capteur sur ressort
41

Capteur sur amortisseur
42

TRAITEMENT

50

60
EXPLOITA-TION

## FIG.4

MESURE ET MEMORISATION
DES SIGNAUX
$$\alpha = (x-y) \text{ et}$$
$$\beta = C (\ddot{x} - \dot{y})$$
GENERES PAR LES CAPTEURS
100

CALCUL DE
$$C = \frac{\beta_0 \, T}{\alpha_1 - \alpha_0}$$
110

EXPLOITATION
120

2

FIG.5

EP 0 220 116 B1